# EUROPÄISCHE PATENTSCHRIFT

(11) **EP 2 364 091 B1**
(45) Veröffentlichungstag und Bekanntmachung des Hinweises auf die Patenterteilung: **13.07.2016**
(21) Anmeldenummer: 09774852.9
(22) Anmeldetag: 12.11.2009
(51) Int. Cl.: A01N 63/00, A01N 51/00, A01N 47/40, A01P 7/04

(54) **VERFAHREN ZUM BEKÄMPFEN VON PATHOGENEN KLEINLEBEWESEN IN EINEM WÄSSRIGEN SYSTEM**
METHOD FOR THE ERADICATION OF PATHOGENIC MICROORGANISMS IN AN AQUEOUS SYSTEM
PROCÉDÉ POUR LUTTER CONTRE DES PETITS ORGANISMES PATHOGÈNES DANS UN SYSTÈME AQUEUX

(30) Priorität: 13.11.2008 DE 102008043715
(43) Veröffentlichungstag der Anmeldung: 14.09.2011
(73) Patentinhaber: Helmholtz-Zentrum für Umweltforschung GmbH - UFZ, 04318 Leipzig (DE)
(72) Erfinder: LIESS, Matthias, 04277 Leipzig (DE); DUQUESNE, Sabine, 04277 Leipzig (DE)
(74) Vertreter: Gulde & Partner
(86) Internationale Anmeldenummer: PCT/EP2009/065025
(87) Internationale Veröffentlichungsnummer: WO 2010/055080

(56) Entgegenhaltungen:
- US-A1- 2006 239 977
- LEON BLAUSTEIN ET AL: "Interactions Between Mosquito Larvae and Species that Share the Same Trophic Level" ANNUAL REVIEW OF ENTOMOLOGY, ANNUAL REVIEWS, US, Bd. 52, 1. Januar 2007 (2007-01-01), Seiten 489-507, XP007912160 ISSN: 0066-4170 [gefunden am 2006-09-15]
- TIFFANY M. KNIGHT ET AL.: "Effects of interspecific competition, predation, and their interaction on survival and development time of immature Anopheles quadrimaculatus" JOURNAL OF VECTOR ECOLOGY, Dezember 2004 (2004-12), Seiten 277-284, XP007912170
- GIL STAV ET AT.: "Individual and interactive effects of a predator and controphic species on mosquito populations" ECOLOGICAL APPLICATIONS, Bd. 15, Nr. 2, 2005, Seiten 587-598, XP009130941
- C.D. MILAM ET AL.: "Evaluating mosquito control pesticides for effect on target and nontarget organisms" ARCH. ENVIRON. CONTAM. TOXICOL., Bd. 39, 2000, Seiten 324-328, XP007912169
- DATABASE MEDLINE [Online] US NATIONAL LIBRARY OF MEDICINE (NLM), BETHESDA, MD, US; Dezember 1982 (1982-12), YAP H H ET AL: "Laboratory and field tests of temephos (AbateR) on mosquito larvae and non-target organisms in rice fields in Malaysia." XP002573060 Database accession no. NLM6189198 & THE SOUTHEAST ASIAN JOURNAL OF TROPICAL MEDICINE AND PUBLIC HEALTH DEC 1982, Bd. 13, Nr. 4, Dezember 1982 (1982-12), Seiten 646-653, ISSN: 0125-1562
- G.G. MARTEN: "Mosquito control by plankton management: the potential of indigestible green algae" JOURNAL OF TROPICAL MEDICINE AND HYGIENE, Bd. 89, 1986, Seiten 213-222, XP007912180

## Beschreibung

Die Erfindung betrifft ein Verfahren zum Bekämpfen und Abtöten von pathogenen Insekten in einem wässrigen System, bevorzugt zur Kontrolle und Bekämpfung der Larven. Vorzugsweise betrifft die Erfindung ein Verfahren zur Bekämpfung von Mücken/Moskitolarven in Gewässern. Eine nachhaltige Reduktion der Insekten bzw. das Abtöten ihrer Larven wird durch ein 2-stufiges Verfahren erreicht, wonach gleichzeitig bakterielle Insektizide und biologische Mittel eingesetzt werden. Die bakteriellen Insektizide töten gezielt die im wässrigen System vorhandenen Larven (z.B. Mosquitos) ab. Zooplankton Gemeinschaften als biologische Mittel, welche erfindungsgemäß bevorzugt Futterkonkurrenten der Insekten und deren Larven umfassen, verhindern eine Wiederbesiedlung. Die kombinierte Anwendung in wässrigen Systemen ermöglicht eine effiziente und dauerhafte Bekämpfung der Insekten.

Diverse pathogene Kleinlebewesen aus der Reihe der Insekten und Würmer schädigen Menschen, Tiere und Pflanzen. Insbesondere die Bedrohung durch Insekten, vorzugsweise von Mücken, als Überträger von Krankheiten (Vektoren) nimmt weltweit zu. Dies betrifft tropische Regionen (Epstein, 1998), aber auch zunehmende "gemäßigten" Klimate. So zum Beispiel die Ausbreitung von *Aedes Albopictus* in Italien seit 1990 und ihre jüngste Ausbreitung in Richtung Deutschland (Knudsen et al., 1996). Die Ausbrüche der Chikungunya-Fiebers in Nord-Ost-Italien (Enserink, 2008) und die Zahl der West-Nil-Virus-Fälle in den USA und Europa (Balenghien, 2007) belegen die zunehmende Bedeutung von Vektor-übertragene Krankheiten für den Menschen. Der Klimawandel, und die damit verbundenen Veränderungen im Wetter, werden sich weiter verstärken (z.B. Erwärmung sowie Niederschlagsmuster und resultierende Überschwemmungen). Somit wird erwartet, dass auch die Probleme im Zusammenhang mit Insekten, wie z.B. den Mücken - und den von ihnen übertragenen Krankheiten - in der Zukunft weiter zunehmen werden. Neben den Stechmücken stellen z.B. auch die Bilharziose verursachenden Larven von Schistosomen (Saugwürmer) ein großes Problem dar. Die Entwicklung wirksamer Methoden zur Kontrolle dieser Populationen sind daher eine dringende Notwendigkeit.

So leben z.B. Mücken in zwei sehr unterschiedlichen Biotopen :
- Im Wasser. Hier werden die Eier abgelegt. Daraus entwickeln sich Larven die kleine Organismen (z.B. Algen, Bakterien) aus dem Wasser als Nahrung aufnehmen. Nach einigen Tagen der Entwicklung verpuppen sich die Larven. Aus den Puppen schlüpfen schließlich die Adulten (Erwachsene geflügelte Tiere).
- In der Luft und am Land. Die flugfähigen adulten Individuen schlüpfen aus den Puppen und leben außerhalb des Wassers.

Mücken sind typische Pionier Arten (Arten, die als erstes neue entstandene Gewässer besiedeln). Von daher sind Mücken sehr häufig in neuen oder periodisch austrocknenden Gewässern zu finden. Gewässer, in denen wenig andere Arten zu finden sind (die z.B. als Konkurrenten fungieren).

Zur Reduzierung von Larven werden in Gewässern in der Regel Insektizide (chemische Giftstoffe), die die Larven töten, eingesetzt. Die damit verbundenen Probleme sind bekannt:
(1) Schnelle Wiederbesiedlung der Larven: Kurze Zeit nach der chemischen Behandlung (einige Tage oder wenige Wochen) entstehen neue Larvenpopulationen nach Eiablage überlebender Insekten.
(2) Belastung des Ökosystems: Die chemische Behandlung kann außer auf die Insekten deutliche Auswirkungen auf andere Organismen haben. Somit kann das gesamte behandelte Ökosystem gestört werden.
(3) Entwicklung resistenter Insekten: Wiederholte chemische Bekämpfung von Populationen führt in vielen Fällen zur Entwicklung von Resistenzen. Eine chemische Verminderung der Effektivität der Bekämpfungsmaßnahmen ist die Folge. Als Reaktion müssen kostenintensive Mehrfachbehandlungen mit höheren Konzentrationen durchgeführt werden.

US2006/239977 A1 beschreibt den Einsatz von Formkörpern, die gleichmäßig am Boden eines wässrigen Gebietes platziert werden und langsam schwimmfähige Partikel freisetzen, die mit partikulären mikrobiologischen Pestiziden beladen sind, diese an die Wasseroberfläche transportieren und die dann dort zur Kontrolle von Insektenlarven freigesetzt werden. LEON BLAUSTEIN et al. beschreiben "Interactions between Mosquito Larvae and Species that Share the Same Trophic Level" in ANNUAL REVIEW OF ENTOMOLOGY, ANNUAL REVIEWS, US, Bd. 52, 1. Januar 2007 (2007-01-01), Seiten 489-507, XP007912160 ISSN: 0066-4170. TIFFANY M. KNIGHT et al. beschreiben "Effects of interspecific competition, predation, and their interaction on survival and development time of immature Anopheles quadrimaculatus" in JOURNAL OF VECTOR ECOLOGY, Dezember 2004 (2004-12), Seiten 277-284, XP007912170. GIL STAV et al. beschreiben "Individual and interactive effects of a predator and controphic species on mosquito populations" in ECOLOGICAL APPLICATIONS, Bd. 15, Nr. 2, 2005, Seiten 587-598, XP009130941. In ARCH. ENVIRON. CONTAM. TOXICOL., Bd. 39, 2000, Seiten 324-328, XP007912169 beschreiben C.D. MILAM et al. "Evaluating mosquito control pesticides for effect on target and nontarget organisms".

Der Erfindung lag nun die Aufgabe zugrunde, ein Verfahren zum Bekämpfen und Abtöten von krankheitserregenden und/oder lästigen Insekten zu entwickeln, dem die Nachteile der bisher verwendeten Mittel nicht mehr oder nur in geringem Maße anhaften.

Die Aufgabe wird durch ein zweistufiges Verfahren zum Bekämpfen und Abtöten von human-, tier- und pflanzenpathogenen Insekten sowie deren Larven in einem wässrigen System gelöst. Anwendung findet das Verfahren in wässrigen Systemen, die die Insekten bzw. deren Larven enthalten oder dazu neigen, dass sie darin wachsen, das heißt in Gewässern, in denen sich bereits Mücken-Eier befinden können. Erfindungsgemäß werden wirksame Mengen mindestens eines bakteriellen Insektizids, und gleichzeitig eine Zooplankton Gemeinschaft als biologisches Mittel zum wässrigen System gegeben. Der Einsatz von Insektizid(en) und biologischen Mitteln erfolgt aufeinander abgestimmt, so dass die Entwicklung des biologischen Mittels nicht oder nur in geringem Maß beeinträchtigt wird.

Vorzugsweise wird eine wirksame Menge des spezifisch (selektiv) wirkenden bakteriellen Insektizids verwendet. Als biologische Mittel dienen erfindungsgemäß vorzugsweise Futterkonkurrenten der Insekten, Würmer und Larven. Erfindungsgemäß handelt es sich bei den Futterkonkurrenten um Zooplankton Gemeinschaften. Die Mittel werden bevorzugt gleichzeitig auf die Oberfläche des wässrigen Systems und/oder in das wässrige System eingebracht. Die erfindungsgemäße Kombination ermöglicht eine effektive und dauerhafte Verminderung von Larven durch den zeitlich nah beieinander liegenden Einsatz von spezifisch wirkenden Giftstoffen und dem beschriebenen Prozess der biologischen Konkurrenz.

Die Erfindung macht sich dabei die Erkenntnis zunutze, dass in Gewässern, die längere Zeit Wasser führen, die Häufigkeit von Pionierarten, wie z.B. Mücken abnimmt und andere Arten wie Daphnien und Copepoden (Zooplankton Gemeinschaften) in ihrer Häufigkeit zunehmen. Diese Arten, welche die Insekten langsam ersetzen, sind meist Konkurrenten um Nahrung und vermindern so die Nahrungsressourcen dieser Insekten. Jedoch ist der Prozess zur Reduzierung von Larven praktisch nicht anwendbar, da ein technischer Einsatz uneffektiv ist. Ein großer Nachteil besteht darin, dass die Verdrängung der Larven durch die Konkurrenten sehr langsam vonstatten geht. Die Verdrängung dauert daher einige Monate.

Bei den zu bekämpfenden human-, tier- und pflanzenpathogenen Insekten handelt es sich insbesondere um Mücken bzw. Moskitos. Unter Bekämpfen wird eine Reduzierung der Population verstanden. Das erfindungsgemäße Verfahren richtet sich insbesondere auf die Bekämpfung pathogener Insekten, indem deren Larven in deren bevorzugtem Lebensbereich, einem wässrigen System, abgetötet werden. Unter einem wässrigen System werden Gewässer im Allgemeinen verstanden. Im Wesentlichen handelt es sich um flache Gewässer, beispielsweise sei die Ufernähe von Seen, Tümpeln, Reisfeldern, Sümpfen und dergleichen genannt.

Erfindungsgemäß zu bekämpfende Insekten sind neben den Stechmücken z.B. auch Fliegen und Wanzen, die beim Stich oder Kontakt Einzeller, Fadenwürmer und Viren übertragen und dadurch schwerwiegende Erkrankungen verursachen können.

Das erfindungsgemäße Verfahren kombiniert die Bekämpfung mit einer ökologischen Komponente, um langfristig die Larven durch die Förderung oder das Einsetzen natürlicher Konkurrenten zu kontrollieren:
Wie schon ausgeführt, werden gleichzeitig mit den bakteriellen Insektiziden biologische Mittel, welche natürliche Konkurrenten der Insekten sind, eingesetzt. Bevorzugte Zooplankton Gemeinschaften sind gemischte oder 1-Art Zooplankton Gemeinschaften, die die Nahrungsressourcen im Gebiet ebenfalls nutzen, so dass eine Wiedererholung der Larven unterdrückt und verhindert wird. Unter Zooplankton werden im Allgemeinen tierische Mikroorganismen verstanden. Es handelt sich um frei im Meer- oder Süßwasser schwebende, meist mikroskopisch kleine tierische Organismen. Dazu gehören z.B. Arten wie Crustacea (Krebse) und andere Wirbellose.

Die erfindungsgemäße Kombination führt zur nahezu vollständigen Unterdrückung einer erneuten Larvenentwicklung durch den zeitlich nah beieinander liegenden Einsatz von Insektiziden und Futterkonkurrenten.

Die Larven werden durch die ausgebrachten Insektizide in ihrer Häufigkeit gegen Null reduziert. Bei der Wahl des Insektizids ist darauf zu achten, dass die Konkurrenten möglichst wenig geschädigt werden. Erfindungsgemäß werden bevorzugt selektiv wirkende Substanzen ausgewählt, die einerseits insbesondere die Larven schnell vernichten, andererseits jedoch die Zooplankton Gemeinschaften nicht schädigen und sich schnell vermehren lassen. Aufgrund des Insektizideinsatzes sind nämlich kaum noch Larven und damit keine Rivalen für die Nahrung vorhanden. Somit wird ein Wiedererstarken der Population nach dem Insektizideinsatz durch das Vorhandensein der natürlichen Konkurrenten verhindert. Die Applikation des Insektizids kann einmalig erfolgen, ein weiterer Einsatz ist in der Regel nicht notwendig. Dadurch werden die Nachteile des Standes der Technik beim Einsatz von Insektiziden vermindert; der zusätzliche Einsatz von Futterkonkurrenten für die Larven macht eine Behandlung mit weiteren Giftstoffen unnötig. Der Erfolg des Verfahrens basiert auf der Tatsache, dass zwei Komponenten, welche für eine erfolgreiche Entwicklung von Larven verantwortlich sind, beeinflusst werden: Die kurzfristige Verminderung der Larven durch die Insektizide (vorzugsweise so genannte Larvizide) und die langfristige Verhinderung der Wiederbesiedlung durch die Einführung von Zooplankton Gemeinschaften (Futterkonkurrenten).

Das erfindungsgemäße Verfahren zur Kontrolle der Larven ist den bisherigen Methoden, die lediglich die chemische Komponente - eine Insektizidbehandlung - umfasst, was zur kurzfristigen Verminderung der Larven führt, weit überlegen. Durch das vorliegende Verfahren wird eine dauerhafte Unterdrückung der Entwicklung von Larven erreicht, was mit den bekannten Mitteln und Verfahren nicht möglich war. Das erfindungsgemäße Verfahren als eine Kombination mit biologischer Komponente, ist hervorragend geeignet, um langfristig Larven abzutöten bzw. zu kontrollieren.

Die bakteriellen Insektizide, welche im Rahmen der Erfindung für die initiale Verminderung der Larven verwendet werden, wirken spezifisch gegen die jeweilige Population und beeinträchtigen die anderen Arten nicht oder kaum, wie z.B. auch die potentiellen Konkurrenten und Feinde von den Larven. Die Konzentration des einzusetzenden Insektizides wird so gewählt, dass es den Großteil der Larven abtötet. Das bedeutet, dass mehr als 70% in den ersten 4 Tagen nach Anwendung abgetötet sein müssen. Dabei dürfen andere Arten kaum beeinträchtigt werden.

Es kommen bakterielle Insektizide zur Anwendung, dessen einmalige Zugabe in der Regel ausreichend sein soll, die Larven abzutöten. Gegebenenfalls kann man die Applikation des Insektizids jedoch wiederholen. Dazu kann man das Insektizid auf die Oberfläche des die Larven enthaltenden wässrigen Systems geben, vorzugsweise sprühen, oder es in das wässrige System einbringen und vorzugsweise oberflächennah versprühen. Das Insektizid kann in unterschiedlichen Formulierungen zum Einsatz kommen, beispielsweise in flüssiger Form, als schwimmfähige Pulver, als schwimmfähige Öle, als Feststoffe oder in Emulsionen.

Die Insektizide werden in der jeweiligen Dosierung eingesetzt, welche ein Abtöten eines Großteils (mindestens 70%) der human-, tier- und pflanzenpathogenen Insekten ermöglicht. Vorzugsweise werden sie in einer Dosierung von ca. 0,5 -1,5 L/ha bzw. von 0,5 bis 1,5 g/m³ wirkungsvoll eingesetzt.

Spezifisch wirkende Insektizide sind dem Fachmann bekannt. Hier sollen stellvertretend einige Mittel genannt werden, die erfindungsgemäß zum Einsatz kommen:
Ein bevorzugt verwendetes bakterielles Insektizid für Mückenlarven ist z.B. *Bacillus thuringienis israelensis. Bacillus thuringiensis israelensis* (Bti) ist eine Bakterie, ein Mikroorganismus, den insbesondere Mückenlarven beim Fressen aufnehmen. Dazu muss Bti z.B. als Pulver, in flüssiger Form oder als Tablette einfach in das Brutgewässer hineingegeben werden. Die Bti-Bakterien enthalten einen besonderen Eiweißkristall, der für die Mückenlarven extrem giftig ist. Dies gilt allerdings ausschließlich für Mückenlarven. Für Menschen, für Fische oder sogar für andere Insekten ist dieser Eiweißkristall völlig harmlos und letztendlich unwirksam. Bereits 15 - 20 Minuten nach der Bakterienmahlzeit sterben die ersten Larven. Das bakterielle Insektizid wird zur Bekämpfung von Mückenlarven bevorzugt mit einer Dosis eingesetzt, die bei 0,5 - 1,5 L/ha liegt, vorzugsweise bei 0,8 L/ ha.

Die Behandlung mit den Insektiziden erzeugt ein von Larven im Wesentlichen freies System. Die ökologische Behandlung verhindert eine neuerliche Besiedlung des Biotops mit Larven. Zur ökologischen Behandlung wird eine potentiell natürliche Gemeinschaft gleichzeitig - und somit in sehr engem zeitlichen Bezug - in das wässrige System eingegeben. Diese Zugabe beschleunigt die natürliche Sukzession (Entwicklung) der Lebensgemeinschaft im System in Richtung einer Gemeinschaft mit vielen Futterkonkurrenten und Räubern der Larven überraschend erheblich.

Eine entsprechende Zooplankton Gemeinschaft (Konkurrenten und Räuber der jeweilig zu bekämpfenden Larven) kann in nahegelegenen älteren - länger wasserführenden - Gewässern gesammelt werden. In diesen Gewässern ist meist die Sukzession bereits so weit fortgeschritten, dass natürlicherweise Konkurrenten und Räuber der Larven vorhanden sind. Die ursprüngliche Dichte der Gemeinschaft im Ursprungsgewässer ist etwa 10 bis 100 Individuen pro Liter. Auch eine Zucht von Konkurrenten und Räuber der Larven ist möglich. Nach dem Transfer der Organismen in das zu behandelnde wässrige System entwickeln sich die Gemeinschaften der Konkurrenten und Räuber der Larven nach wenigen Tagen bis hin zu zwei Wochen zu hohen Dichten. Die Geschwindigkeit der Entwicklung hängt von der ursprünglichen Dichte der eingesetzten Organismen sowie den physikalischen und chemischen Bedingungen im Gewässer ab. Erfindungsgemäß wird vorzugsweise eine gemischte Gemeinschaft eingesetzt, die meist die folgenden Arten umfasst: Daphnia, Ceriodaphnia, Simocephalus, Scapheloberis, Ostracoda und/oder Cyclopoida. Unter einer 1-Art Gemeinschaft werden Gemeinschaften verstanden, die aus einer Art eines geeigneten Konkurrenten bestehen. Geeignete Konkurrenten welche als einzige Art eingesetzt werden können sind z.B. Daphnia Arten, welche Nahrungskonkurrenten der Mücken sind. Die Zooplankton Gemeinschaften können ggf. durch Wasserfiltration angereichert werden, so z.B. mit geeigneten Netzen, vorzugsweise mit Maschenweiten von etwa180 µm.

Die Zooplankton Gemeinschaft wird vorteilhafter weise in die Gewässer mit einer Dosierung eingebracht, die die Menge der human-, tier- und pflanzenpathogenen Kleinlebewesen nach der Pestizidbehandlung übersteigt. Dies sind z.B. 10 bis 200 Individuen/L.

Diese ökologische Behandlung - Zugabe einer auch im natürlichen Zusammenhang vorhandenen Gemeinschaft, vermindert (i) eine Wiederbesiedlung der Mückenlarven nach der chemischen Behandlung mit Insektiziden sowie (ii) die Entwicklung und Überlebensrate eventuell vorhandener Larven. Die Mechanismen dieses negativen Einflusses sind zum einen Konkurrenz um Nahrung und zum anderen die Wirkung der Fraßfeinde der Mückenlarven.

Eine besonders erfolgreiche Bekämpfung von Mückenlarven konnte durch eine kombinierte Behandlung der Larven durch Bti und einer Zooplankton Gemeinschaft erreicht werden. Die bevorzugte Gemeinschaft weist die folgenden Taxa auf: Daphnia, Ceriodaphnia, Simocephalus, Scapheloberis, Ostracoda und Cyclopoida, bevorzugt in den Anteilen: 4, 74, 7, 3, 10 und 1%. Nach einmaliger Applikation des Insektizids in Kombination mit der Zooplankton Gemeinschaft waren auch nach 3 Wochen nur in Einzelfällen wenige Mückenlarven erkennbar.

Mit dem erfindungsgemäßen Verfahren kann eine Wiederbesiedlung nach Behandlung mit spezifisch wirkenden Insektiziden und durch die Entwicklung von Konkurrenten und Räubern erfolgreich verhindert werden. Wenn das Gewässer nicht austrocknet, oder eine andere Störung die Gemeinschaft der Konkurrenten und Räuber deutlich beeinträchtigt, wird dauerhaft eine Unterdrückung der Larven erreicht. Weiterhin zeigen neben den Untersuchungen in Deutschland (Beispiele unten) die Ergebnisse einer Untersuchung z.B. in Kamerun, Afrika, dass das erfindungsgemäße Verfahren auch in anderen Klimaregionen (z.B. tropischen und subtropischen Gebieten) erfolgreich eingesetzt werden kann.

### Ausführungsbeispiele

### Beispiel 1:

Die Methode wurde in künstlichen Freilandgewässern (60 Liter) in ihrer Wirksamkeit untersucht. Die Gewässer waren mit einer natürlichen Population von *Culex pipiens* besiedelt. Die initiale chemische Behandlung erfolgte mit dem Insektizid Bacillus Thurigiensis Israelis (Bti, Vectobac 12S) mit 1 g/m³.
- Im Ansatz "A" wurde lediglich das Insektizid eingesetzt.
- Im Ansatz "B" wurde lediglich eine gemischte Zooplankton Gemeinschaft in die Gewässer eingesetzt (50 Individuen/Liter).
- Im Ansatz "C" wurde das Pestizid und gleichzeitig eine gemischte Zooplankton Gemeinschaft in die Gewässer eingesetzt (50 Individuen/Liter).
- Im Ansatz "D" erfolgte keine Manipulation.

Wurde ein Insektizid eingesetzt ("A", "C"), verminderte sich die Mückenlarvenpopulation von etwa 200 Larven/Liter auf 0 Larven/Liter in den ersten beiden Tagen. Wurde nur diese chemische Behandlung durchgeführt ("A"), wurden die Gewässer mit Mückenlarven in den folgenden 20 Tagen wiederbesiedelt (Etwa 150 Larven/Liter). Diese Menge war vergleichbar mit der Larvenanzahl in Ansatz "D" (ohne Behandlung). Erfolgte eine kombinierte chemische und biologische Behandlung ("C"), waren in den Gewässern bis zum Ende des Versuches nach 20 Tagen keine Mückenlarven vorhanden. Im rein biologischen Ansatz ("B") verminderte sich die Dichte der Mückenlarven lediglich langsam von 280 Individuen/Liter auf 50 Individuen/Liter in den 20 Tagen des Versuches.

### Beispiel 2:

Die Methode wurde in natürlichen neu entstandenen Kleingewässern in Auenwäldern in der Region Leipzig im Sommer 2008 angewendet. Die Gewässer waren mit einer natürlichen Population von *Culex pipiens* besiedelt. Die initiale chemische Behandlung erfolgte mit dem Insektizid *Bacillus Thurigiensis Israelis* (Bti, Vectobac 12S) mit 1 g/1m³.
- Im Ansatz "A" wurde lediglich das Insektizid eingesetzt.
- Im Ansatz "B" wurde das Insektizid und gleichzeitig eine gemischte Zooplankton Gemeinschaft in die Gewässer eingesetzt (Daphnia, Ceriodaphnia, Simocephalus, Scapheloberis, Ostracoda, Cyclopoida in den folgenden Anteilen: 4, 74, 7, 3, 10 und 1%; insgesamt etwa 100 Individuen/Liter).

Die Ergebnisse zeigten, dass in beiden Ansätzen die Mückenlarven in den ersten drei Tagen von etwa 200 Larven/Liter auf 0 Larven/Liter abnahmen. Im Ansatz "A" (ohne Gemeinschaft) erfolgte vom Tag 4 eine Wiederbesiedlung der Gewässer mit Mückenlarven. Nach 20 Tagen waren hier etwa 250 Larven/Liter vorhanden. Im Ansatz "B" (mit Gemeinschaft) waren nach 20 Tagen lediglich nur in Einzelfällen wenige Mückenlarven erkennbar.

Beide Beispiele zeigen, dass nur die kombinierte Wirkung von Insektiziden und Konkurrenten und Räubern der Mückenlarven eine nachhaltige und damit effektive Kontrolle der Mückenlarven ermöglicht.

## Patentansprüche

1. Verfahren zum Bekämpfen und Abtöten von Insekten sowie deren Larven in einem wässrigen System, das die Insekten oder Larven enthält oder dazu neigt, dass diese darin wachsen, **dadurch gekennzeichnet, dass** man mindestens ein bakterielles Insektizid in Kombination mit einer Zooplankton Gemeinschaft zu dem wässrigen System gibt.

2. Verfahren nach Anspruch 1, **dadurch gekennzeichnet, dass** es sich bei den Insekten um Mücken und Moskitos handelt.

3. Verfahren nach einem der Ansprüche 1 oder 2, **dadurch gekennzeichnet, dass** man als bakterielles Insektizid *Bacillus thuringiensis israelensis* verwendet.

4. Verfahren nach einem der Ansprüche 1 bis 3, **dadurch gekennzeichnet, dass** man das Insektizid in einer Dosierung von 0,5 bis 1,5 L/ha oder 0,5 bis 1,5 g/m³ einsetzt.

5. Verfahren nach einem der Ansprüche 1 bis 4, **dadurch gekennzeichnet, dass** man das Insektizid in flüssiger Form, als schwimmfähige Pulver, Öle, als Feststoffe oder in Emulsionen einsetzt.

6. Verfahren nach einem der Ansprüche 1 bis 5, **dadurch gekennzeichnet, dass** man das Insektizid auf die Oberfläche des wässrigen Systems gibt oder es in das wässrige System einbringt.

7. Verfahren nach einem der Ansprüche 1 bis 6, **dadurch gekennzeichnet, dass** man als Zooplankton Gemeinschaften gemischte oder 1-Art Zooplankton Gemeinschaften in die Gewässer einbringt, welche man Gewässern entnimmt oder züchtet.

8. Verfahren nach einem der Ansprüche 1 bis 7, **dadurch gekennzeichnet, dass** die Zooplankton Gemeinschaft die Taxa Daphnia, Ceriodaphnia, Simocephalus, Scapheloberis, Ostracoda und/oder Cyclopoida umfasst.

9. Verfahren nach einem der Ansprüche 1 bis 8, **dadurch gekennzeichnet, dass** man die Zooplankton Gemeinschaft in die Gewässer mit einer Dosierung von 10 bis 200 Individuen/L einbringt.

10. Verfahren nach einem der Ansprüche 1 bis 9, **dadurch gekennzeichnet, dass** man das bakterielle Insektizid *Bacillus thuringiensis israelensis* in Kombination mit einer Zooplankton Gemeinschaft einsetzt, die sich zusammensetzt aus Daphnia, Ceriodaphnia, Simocephalus, Scapheloberis, Ostracoda und Cyclopoida.

11. Verfahren nach Anspruch 10, **dadurch gekennzeichnet, dass** man *Bacillus thuringiensis israelensis* in einer effektiven Dosierung von 0,5 bis 1,5 g/m³ in Kombination mit einer Zooplankton Gemeinschaft einsetzt, die sich zusammensetzt aus Daphnia, Ceriodaphnia, Simocephalus, Scapheloberis, Ostracoda und Cyclopoida in den folgenden Anteilen: 4, 74, 7, 3, 10 und 1%; und eine Menge von von 10 bis 200 Individuen/Liter an Konkurrenten aufweist.

12. Verfahren nach einem der Ansprüche 1 bis 11, **dadurch gekennzeichnet, dass** man Insektizid und Zooplankton Gemeinschaft gleichzeitig oder zeitlich nahe beieinander zum wässrigen System gibt, wobei die Applikation des Insektizids einmalig oder mehrfach erfolgt.

13. Verwendung mindestens eines bakteriellen Insektizids in Kombination mit einer Zooplankton Gemeinschaft zum Bekämpfen und Abtöten von Mücken- und Moskitolarven in einem wässrigen System, welches Mücken- und Moskito-Eier und/oder -larven aufweist.

## Claims

1. A method for the eradication and destruction of insects and larvae thereof in an aqueous system which contains said insects or larvae or tends to allow their growth therein, **characterized in that** at least one bacterial insecticide in combination with a zooplankton community is added to the aqueous system.

2. The method according to Claim 1, **characterized in that** the insects are gnats and mosquitos.

3. The method according to any one of Claims 1 or 2, **characterized in that** *Bacillus thuringienis israelensis* is used as the bacterial insecticide

4. The method according to any one of Claims 1 to 3, **characterized in that** the insecticide is used at a dosage of 0.5 to 1.5 l/ha or 0.5 to 1.5 g/m³.

5. The method according to any one of Claims 1 to 4, **characterized in that** the insecticide is used in liquid form, as floating powders, oils, as solids or in emulsions.

6. The method according to any one of Claims 1 to 5, **characterized in that** the insecticide is placed on the surface of the aqueous system or incorporated into the aqueous system.

7. The method according to any one of Claims 1 to 6, **characterized in that** mixed or single-species zooplankton communities taken from water bodies or bred are incorporated as zooplankton communities into the water bodies.

8. The method according to any one of Claims 1 to 7, **characterized in that** the zooplankton community comprises the *Daphnia, Ceriodaphnia, Simocephalus, Scapheloberis, Ostracoda* and/or *Cyclopoida* taxa.

9. The method according to any one of Claims 1 to 8, **characterized in that** the zooplankton community is incorporated into the water bodies at a dosage of 10 to 200 individuals/I.

10. The method according to any one of Claims 1 to 9, **characterized in that** the bacterial insecticide *Bacillus thuringienis israelensis* is used in combination with a zooplankton community composed of *Daphnia, Ceriodaphnia, Simocephalus, Scapheloberis, Ostracoda* and *Cyclopoida.*

11. The method according to Claim 10, **characterized in that** *Bacillus thuringienis israelensis* is used at an effective dosage of 0.5 to 1.5 g/m³ in combination with a zooplankton community which is composed of *Daphnia, Ceriodaphnia, Simocephalus, Scapheloberis, Ostracoda* and *Cyclopoida* in the following proportions: 4, 74, 7, 3, 10 and 1% and comprises an amount of competitors of 10 to 200 individuals/liter.

12. The method according to any one of Claims 1 to 11, **characterized in that** the insecticide and zooplankton community are added to the aqueous system simultaneously or in close temporal proximity, said insecticide being applied once or several times.

13. Use of at least one bacterial insecticide in combination with a zooplankton community to eradicate and destroy gnat and mosquito larvae in an aqueous system which comprises gnat and mosquito eggs and/or larvae.

## Revendications

1. Procédé pour lutter et détruire des insectes et leurs larves dans un système aqueux contenant les insectes ou les larves ou favorable à la croissance de ceux-ci, **caractérisé en ce qu'**il est ajouté au système aqueux au moins un insecticide bactérien en combinaison avec un groupe de zooplancton.

2. Procédé selon la revendication 1, **caractérisé en ce que** les insectes sont des nématocères et des moustiques.

3. Procédé selon la revendication 1 ou la revendication 2, **caractérisé en ce que** l'insecticide bactérien est *Bacillus thuringiensis israelensis.*

4. Procédé selon l'une des revendications 1 à 3, **caractérisé en ce que** l'insecticide est mis en oeuvre suivant un dosage de 0,5 à 1,5 l/ha ou 0,5 à 1,5 g/m³.

5. Procédé selon l'une des revendications 1 à 4, **caractérisé en ce que** l'insecticide est mis en oeuvre sous forme liquide, en tant que poudres flottantes, huiles, en tant que matières solides ou en émulsions.

6. Procédé selon l'une des revendications 1 à 5, **caractérisé en ce que** l'insecticide est administré à la surface du système aqueux ou introduit dans le système aqueux.

7. Procédé selon l'une des revendications 1 à 6, **caractérisé en ce que** les groupes de zooplancton introduits dans les milieux aqueux sont des groupes de zooplancton mixtes ou monogénériques, que l'on prélève ou fait croître dans des milieux aqueux.

8. Procédé selon l'une des revendications 1 à 7, **caractérisé en ce que** le groupe de zooplancton comprend Taxa Daphnia, Ceriodaphnia, Simocephalus, Scapheloberis, Ostracoda et/ou Cyclopoida.

9. Procédé selon l'une des revendications 1 à 8, **caractérisé en ce que** le groupe de zooplancton est introduit dans les milieux aqueux suivant un dosage de 10 à 200 individus/l.

10. Procédé selon l'une des revendications 1 à 9, **caractérisé en ce que** l'insecticide bactérien *Bacillus thuringiensis israelensis* est mis en oeuvre en combinaison avec un groupe de zooplancton comprenant Daphnia, Ceriodaphnia, Simocephalus, Scapheloberis, Ostracoda et Cyclopoida.

11. Procédé selon la revendication 10, **caractérisé en ce que** *Bacillus thuringiensis israelensis* est mis en oeuvre suivant un dosage efficace de 0,5 à 1,5 g/m³ en combinaison avec un groupe de zooplancton comprenant Daphnia, Ceriodaphnia, Simocephalus, Scapheloberis, Ostracoda et Cyclopoida dans les proportions suivantes : 4, 74, 7, 3, 10 et 1 % ; et contenant une quantité de 10 à 200 individus concurrents/l.

12. Procédé selon l'une des revendications 1 à 11, **caractérisé en ce que** l'insecticide et le groupe de zooplancton sont administrés dans le système aqueux simultanément ou de manière temporellement rapprochée, l'insecticide étant appliqué une seule ou plusieurs fois.

13. Utilisation d'au moins un moins un insecticide bactérien en combinaison avec un groupe de zooplancton pour combattre et détruire des larves de nématocères et de moustiques dans un système aqueux contenant des oeufs et/ou des larves de nématocères et de moustiques.
